# EUROPÄISCHE PATENTSCHRIFT

(11) **EP 2 362 242 B1**
(45) Veröffentlichungstag und Bekanntmachung des Hinweises auf die Patenterteilung: **22.08.2012**
(21) Anmeldenummer: 10154691.9
(22) Anmeldetag: 25.02.2010
(51) Int. Cl.: G01V 8/20

(54) **Optoelektronischer Sensor**
Optoelectronic sensor
Capteur optoélectronique

(43) Veröffentlichungstag der Anmeldung: 31.08.2011
(73) Patentinhaber: SICK AG, 79183 Waldkirch (DE)
(72) Erfinder: Klingelhöfer, Christian, 79110, Freiburg (DE)
(74) Vertreter: Ludewigt, Christoph

(56) Entgegenhaltungen:
- DE-A1- 10 038 025
- DE-A1- 10 355 008
- DE-A1- 19 914 114
- DE-C1- 19 525 057

## Beschreibung

Die Erfindung betrifft einen optoelektronischen Sensor nach dem Oberbegriff des Anspruchs 1.

Ein solcher optoelektronischer Sensor findet beispielsweise Anwendung an Maschinen zur Absicherung von gefahrbringenden Bewegungen für Personen. Greift eine Person unerlaubt in ein durch Lichtstrahlen gebildetes Schutzfeld ein, wird wenigstens ein Lichtweg unterbrochen. Das führt über einen sicheren Ausgang zur Ausgabe eines Signals an eine Maschinensteuerung, um eine gefahrbringende Bewegung zum Schutz der Person zu stoppen.

Optoelektronische Sensoren finden Anwendung als Durchgangs- oder Durchgriffsicherung zur Maschinenabsicherung, um Bedienpersonal vor gefahrbringenden Bewegungen der Maschine zu schützen. Die entsprechenden Sicherheitsnormen, wie z. B. EN 954 und/oder IEC 61508, müssen dabei erfüllt werden.

Aus der DE 199 14 114 A1 ist eine Lichtschrankenanordnung bekannt mit einer oberen und einer unteren Schaltschwelle, die selbsttätig auf eintreffendes Sendelicht eingestellt werden. Eine Überschreitung der oberen Schwelle führt zu einem Nachführen der oberen Schaltschwelle.

Aus der DE 100 38 025 C2 ist ein Lichtgitter mit einzelnen Lichtschranken offenbart, wobei ein unterer Schwellwert und ein oberer Schwellwert ermittelt wird. Überschreitet das Sendelicht den unteren Schwellwert, wird das Sendelicht als abgeschwächt eingestuft, überschreitet das Sendelicht den oberen Schwellwert, wird das Sendelicht als ausreichend angesehen.

Bei den Lichtgittern nach dem Stand der Technik ist es jedoch möglich, dass durch spiegelnde oder reflektierende Flächen in der Nähe des Schutzfeldes Lichtstrahlen des Senders in den Empfänger gelangen, obwohl sich ein Objekt in dem Schutzfeld befindet, so dass die Unterbrechung nicht erkannt wird. Dies wird fachüblich auch als Umspiegelung bezeichnet.

Um dies zu verhindern, wird bei den bekannten Lichtgittern das Licht der Lichtsender in einem engen Abstrahlwinkel ausgesendet, so dass ein Lichtsendekegel mit +/-5° bis +/-10° Öffnungswinkel entsteht. Ebenso ist der Empfangslichtkegel begrenzt. Zusätzlich wird als organisatorische Maßnahme gefordert, dass sich keine spiegelnden Flächen innerhalb des Lichtsendekegels und des Empfangslichtkegels befinden dürfen.

Durch die Winkelbegrenzung des Sendelichts und des Empfangslichts wird eine Ausrichtung der Lichtsender und der Lichtempfänger zueinander sehr schwierig, da eine genaue Justierung der Lichtsender auf die Empfänger erfolgen muss. Weiter wird beim Auftreten von beispielsweise Vibrationen eine Verfügbarkeit des Sensors eingeschränkt, da es vorkommen kann, dass dadurch nicht mehr genügend Lichtenergie auf den Lichtempfänger trifft.

Durch die organisatorische Maßnahme, spiegelnde Flächen in der Nähe des Schutzfeldes zu verbieten, wird die Verwendung von Sicherheitslichtgittern in Anwendungen, bei denen sich zeitweise spiegelnde Flächen, beispielsweise Stahlwerkzeuge oder Stahlbleche als Werkstücke, in der verbotenen Zone befinden müssen, erheblich erschwert oder gar unmöglich gemacht.

Der Erfindung liegt die Aufgabe zugrunde, einen optoelektronischen Sensor bereitzustellen, der in der Lage ist, umspiegelte Lichtstrahlen zu erkennen. Eine weitere Aufgabe besteht darin, eine bisher notwendige Winkelbegrenzung des Sende- bzw. Empfangslichts zu vermeiden.

Die Aufgabe wird gelöst mit einem optoelektronischen Sensor bestehend aus einer ersten Leiste mit Sendeelementen und/oder Empfangselementen und einer zweiten Leiste mit Sendeelementen und/oder Empfangselementen, wobei Sendeelemente einer Leiste mit Empfangselementen der anderen Leiste Sende-/Empfangspaare bilden zur Bildung eines Schutzfeldes. Weiter ist eine Auswerteeinheit vorgesehen zur Auswertung des empfangenen Lichts der Empfangselemente, wobei ein Lichtstrahl zwischen Sendeelementen und Empfangselementen als unterbrochen gilt, wenn empfangenes Licht eine erste untere Schaltschwelle unterschreitet und als nicht unterbrochen gilt, wenn eine erste untere Schaltschwelle überschritten wird. Die Auswerteeinheit dazu ausgebildet ist, ein Objektfeststellungssignal auszugeben, wenn wenigstens ein Lichtstrahl unterbrochen ist, wobei in der Auswerteeinheit zur Auswertung des empfangenen Lichts wenigstens eines Empfangselementes eine zweite obere Schaltschwelle vorgesehen ist, deren Wert über dem Wert der ersten unteren Schaltschwelle liegt, wobei die Auswerteeinheit dazu ausgebildet, ein ein Signal zur Meldung einer Umspiegelung abzugeben, wenn der Wert des empfangenen Lichts über dem zweiten oberen Schwellwert liegt.

Dadurch ist es möglich, eine Umspiegelung auch dann zu detektieren, wenn der direkte Lichtweg zwischen einem Sendeelement und dem zugehörigen Empfangselement frei ist, da sich das Licht der direkten Lichtstrecke zu dem umgelenkten oder umspiegelten Licht addiert und damit die obere zweite Schaltschwelle überschritten wird. Hierzu ist die zweite Schaltschwelle derart eingestellt, dass eine Summe von direkten Lichtstrahlen aus dem Lichtsender und umgelenkten oder umspiegelten Lichtstrahlen über der zweiten Schaltschwelle liegen.

Aufgrund des Signals zur Meldung der Umspiegelung kann ein Warnsignal, eine visuelle Anzeige oder auch ein Stoppsignal für eine gefahrbringende Bewegung ausgegeben werden. Im Falle des Warnsignals oder der visuellen Anzeige wird ein Bediener darauf aufmerksam gemacht, dass eine nachteilige Umspiegelung vorhanden ist und kann diese ggf. entfernen oder verhindern. Jedoch kann es auch vorgesehen sein aufgrund einer detektierten Umspiegelung ein Stoppsignal auszugeben um für den Fall, dass eine Umspiegelung detektiert wurde, eine gefahrbringende Bewegung entweder zu stoppen oder dafür zu sorgen, dass die Maschine und damit die gefahrbringende Bewegung nicht gestartet werden kann. Dadurch wird gewährleistet, dass es aufgrund der Umspiegelung nicht zu einer Gefährdung von Personen kommen kann.

Vorteilhaft ist die erste untere Schaltschwelle derart eingestellt, dass gestreutes oder umspiegeltes Licht unterhalb dieser ersten unteren Schaltschwelle liegt. Dies wird dadurch erreicht, dass die Schaltschwelle der Empfangselemente oder die Sendeleistung der Sendeelemente so eingestellt wird, dass bei direktem Lichtstrahl die Empfangselemente gerade ausreichend Licht empfangen, um gültig eine freie direkte Lichtstrecke zu ermitteln. Umspiegeltes Licht ist durch die Lichtumlenkung entsprechend geschwächt und führt allein nicht zu einem gültigen Empfangssignal. Durch diese Bedingung ist sichergestellt, dass trotz einer Abdeckung des direkten Lichtstrahls zwischen Sendeelement und Empfangselement die umgelenkten oder umspiegelten Lichtstrahlen nicht dazu führen, dass genügend Licht auf das Empfangselement trifft und so das Objektfeststellungssignal irrtümlich zurückgesetzt wird.

In Weiterbildung der Erfindung ist der Wert der oberen zweiten Schaltschwelle kleiner als der doppelte Wert der unteren ersten Schaltschwelle, wobei die Lichtenergie von direkten Lichtstrahlen kleiner gleich der zweiten oberen Schaltschwelle eingestellt ist. Damit wird eine maximale Signalreserve des direkten Lichtstrahls, also des Nutzsignals erreicht. Weiterhin wird erreicht, dass bei abgeschwächtem Nutzsignal und einem Streusignal, entweder die Umspiegelung bei nicht unterbrochenem direkten Lichtstrahl erkannt wird, oder aber die Lichtenergie des umspiegelten Lichtstrahls nicht ausreicht, um die untere erste Schaltschwelle zu überschreiten.

Die untere erste Schaltschwelle ist kleiner gleich der Lichtenergie von direkten Lichtstrahlen eingestellt. Dadurch führen umspiegelte Lichtstrahlen, deren Lichtenergie unter der Lichtenergie eines direkten Lichtstrahles liegt, nicht zu einem gültigen Signal.

In einer bevorzugten Ausführungsform ist der optoelektronische Sensor als Sicherheitslichtgitter ausgebildet und muss die Sicherheitsnormen z. B. EN 954 und/oder IEC 61508 erfüllen.

Bei Lichtgittern, bei denen in jeweils einer Leiste sowohl Sendeelemente als auch Empfangselemente vorgesehen sind, kann über einen optischen Hin- und Rückkanal die Lichtenergie der Sendeelemente automatisch angepasst werden. Alternativ kann dies auch über eine andere Kommunikationsverbindung zwischen den beiden gegenüberliegenden Leisten geschehen, beispielsweise über eine galvanische Verbindung.

Da die von den Sendeelementen ausgesendete Lichtenergie umgekehrt proportional zum Quadrat des Abstands ist, kann über eine Bestimmung des Abstandes auch die Lichtenergie voreingestellt werden. Eine automatische Bestimmung des Abstandes zwischen Lichtgitterleisten kann beispielsweise nach der EP 1 544 643 durchgeführt werden.

In Weiterbildung der Erfindung werden die Sendeelemente so eingestellt, dass diese alle jeweils für eine ungefähr gleiche Lichtenergie auf den zugehörigen Empfangselementen sorgen. Anschließend wird die Lichtenergie je nach Abstand zwischen den Lichtgitterleisten nur noch an allen Sendeelementen gleichermaßen verändert. Damit wird erreicht, dass eine Umspiegelung einzelner Strahlen durch Vergleich mit Empfangssignalen nicht umspiegelter Strahlen erkannt wird. Eine gleichmäßige Umspiegelung aller Sendelement-/Empfangselementpaare eines Lichtgitters wird hierbei als hinreichend unwahrscheinlich angesehen.

Beim Betrieb mehrerer Sicherheitslichtgitter in unmittelbarer Nachbarschaft zueinander, empfangen die Empfangselemente in der Regel nicht nur das Licht des zugehörigen Sendeelementes, sondern auch Licht anderer Sendeelemente. Um die Auswertung nicht zugehöriger Sendeelemente zu einem Empfangselement zu verhindern, werden die Lichtstrahlen unterschiedlich kodiert. Beispielsweise im Zeitbereich, im Zeitmultiplexbetrieb oder im Frequenzbereich durch Pulsmuster oder Pseudozufallsrauschcodes.

Derartige Kodierverfahren werden durch die vorliegende Erfindung besonders wirksam. Bisher konnten derartige Kodierverfahren nur eingeschränkt genutzt werden, da die Lichtpulse durch ihre Lichtenergie Sättigungseffekte in den Lichtempfängern hervorrufen konnten und dadurch die empfangenen Pulse stark verformt wurden, so dass im Zweifel in Folge aus Sicherheitsgründen ein Objektfeststellungssignal ausgelöst wurde, was zu einer eingeschränkten Verfügbarkeit führte.

Die Empfangselemente und die Auswerteeinheit arbeiten jedoch erfindungsgemäß in einem linearen Arbeitsbereich. Das bedeutet, dass die Empfangselemente und die Auswerteeinheit durch das empfangene Licht nicht übersteuert werden. Dadurch wird eine Verfügbarkeit der optoelektronischen Sensoren, insbesondere Lichtgittern erhöht, weil dadurch eine Funktionsreserve vorgesehen ist. Weiterhin ist eine Realisierung von weit mehr Kodierungen möglich als bisher, da die unterschiedlichen Kodes, aufgrund einer besseren Empfindlichkeit in dem linearen Arbeitsbereich besser erkannt und aufgelöst werden können und daher besser gegeneinander getrennt werden können.

Im Folgenden wird die Erfindung an Hand von Ausführungsbeispielen unter Bezugnahme auf die Zeichnung im Einzelnen erläutert.

In der Zeichnung zeigt:
- Figur 1: eine schematische Darstellung eines erfindungsgemäßen optoelektronischen Sensors;
- Figur 2 und 3: eine schematische Darstellung einer Umspiegelung eines Lichtstrahls;
- Figuren 4 und 5: eine schematische Darstellung von Schaltschwellen.

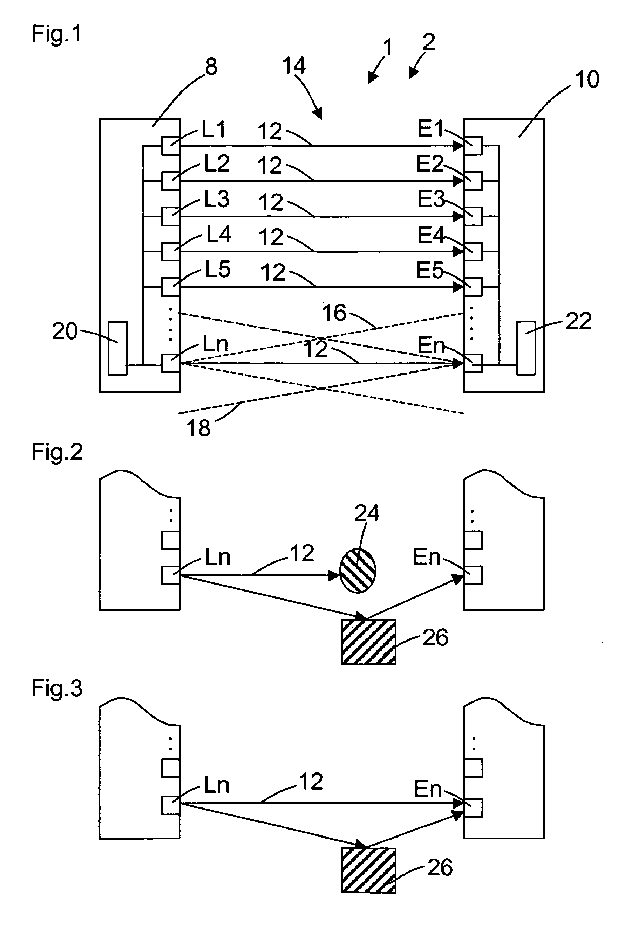

Figur 1 zeigt einen optoelektonischen Sensor 1, insbesondere ein Sicherheitslichtgitter 2, bestehend aus einer ersten Leiste 8 und einer zweiten Leiste 10. Die beiden Leisten 8 und 10 sind zueinander gegenüberliegend angeordnet. Die Sendeelemente L1 bis Ln der ersten Leiste 2 senden dabei Licht aus, welches von den Empfangselementen E1 bis En der zweiten Leiste 10 empfangen wird, wodurch Sende-/Empfangspaare gebildet werden, dargestellt durch die optischen Lichtstrahlen 12. Dabei muss nicht unbedingt die Anzahl der Sender gleich der Anzahl der Empfänger sein. Dadurch wird zwischen den beiden Leisten 8 und 10 ein Schutzfeld 14 gebildet. Ein solches Sicherheitslichtgitter 2 findet beispielsweise Anwendung an Maschinen zur Absicherung von gefahrbringenden Bewegungen für Personen. Greift eine Person in das Schutzfeld 14 ein, wird wenigstens ein Lichtstrahl 12 abgeschwächt oder unterbrochen. Das führt über einen vorgesehenen sicheren Ausgang zur Ausgabe eines Signals an eine Maschinensteuerung, um die gefahrbringende Bewegung zum Schutz der Person zu stoppen.

Bei dem Sicherheitslichtgitter 1 kann es sich auch um ein Lichtgitter handeln mit identischen Sender-/Empfängerleisten gemäß dem Patent EP 1 870 734.

Die Sendeelemente L1 bis Ln bestehen dabei aus einem Sendebauteil, beispielsweise einer Leuchtdiode und einer Sendeoptik, bestehend aus einer Blende und/oder einer oder mehrerer Linsen. Die Empfangselemente E1 bis En sind analog dazu aus einem photoempfindlichen Bauteil und einer Optik aufgebaut. Die optischen Achsen der Sende- bzw. Empfangselemente einer Leiste sind dabei parallel zueinander ausgerichtet.

Das Licht der Sendeelemente L1 bis Ln wird dabei in Form eines Lichtsendekegels 16 ausgesendet, beispielhaft für alle Sendeelemente L1 bis Ln an dem Sendeelement Ln dargestellt, entsprechend den gestrichelten Linien. Die Empfangselemente weisen ebenso einen Empfangskegel 18 auf, innerhalb dessen Licht empfangen wird, beispielhaft dargestellt an dem Empfangselement En durch weitere gestrichelte Linien die von dem Empfangselement En ausgehen. Je größer die Öffnungswinkel der Lichtkegel ausgebildet sind, desto einfacher lassen sich die beiden Leisten zueinander ausrichten.

Zur Ansteuerung sind die Sendeelemente L1 bis Ln mit einer Steuereinheit 20 verbunden. Zur Auswertung sind die Empfangselemente E1 bis En mit einer Auswerteeinheit 22 verbunden. Sind Sendelemente L1 bis Ln und Empfangselemente E1 bis En zusammen in jeweils einer Leiste integriert, ist jeweils eine kombinierte Steuer- und Auswerteeinheit vorgesehen. Die Sendeelemente L1 bis Ln gemäß Figur 1 werden durch die Steuereinheit 20 nacheinander angesteuert, wobei diese gepulst angesteuert werden können zur Unterdrückung von Fremdlichtsignalen. Die Empfangselemente E1 bis En werden durch die Auswerteeinheit 22 nacheinander ausgewertet zum Empfang der Lichtpulse der gegenüberliegenden Sendeelemente L1 bis Ln. Damit die beiden Leisten 8 und 10 zusammenarbeiten können, um das Schutzfeld 14 aufzuspannen, sind die Paare von Sendeelementen L1 - Ln und Empfangselementen E1 - En zur Bildung von Lichtwegen aufeinander abzustimmen, so dass beispielsweise das Empfangselement E1 nur das Licht von dem Sendeelement L1 empfängt. Dazu weist die Auswerteeinheit 22 Mittel zur zeitlichen Synchronisation auf. Die Auswerteeinheit 22 kann damit die Auswertung der Empfangselemente E1 bis En auf die Sendepulse der gegenüberliegenden Sendeelemente L1 bis Ln synchronisieren, wodurch die Lichtwege mit den Lichtstrahlen 12 definiert sind.

Figur 2 zeigt das Lichtgitter aus Figur 1 beispielhaft mit einem Sendeelement Ln und einem Empfangselement En. Der Lichtstrahl 12 wird durch das Objekt 24 oder eine Person unterbrochen, so dass kein Licht direkt vom Sendeelement Ln in das Empfangselement En gelangt. In diesem Fall soll und wird ein Objektfeststellungssignal ausgegeben, um beispielsweise eine gefahrbringende Bewegung einer Maschine zu stoppen.

Zusätzlich gelangt das Sendelicht des Sendeelements durch eine Umspiegelung unerwünscht über ein reflektierendes Objekt in das Empfangselement En. Dadurch soll jedoch das Objektfeststellungssignal nicht aufgehoben werden.

Figur 3 zeigt eine identische Anordnung wie Figur 2, wobei lediglich das Objekt 24 aus Figur 2 nicht mehr vorhanden ist, so dass die Lichtstrahlen 12 direkt vom Sendeelement Ln auf das Empfangselement En gelangen. Der Lichtstrahl 12 wird jedoch weiterhin durch das reflektierende Objekt 26 auf das Empfangselement gelenkt. In diesem Fall wird ein Signal zur Meldung der Umspiegelung, insbesondere ein Warnsignal, eine visuelle Anzeige oder ein Stoppsignal abgegeben, letzteres führt dazu, dass eine gefahrbringende Bewegung gestoppt wird, um Personen aufgrund einer möglichen Fehl-Erkennung von Lichtstrahlen vor einer gefahrbringenden Bewegung zu schützen.

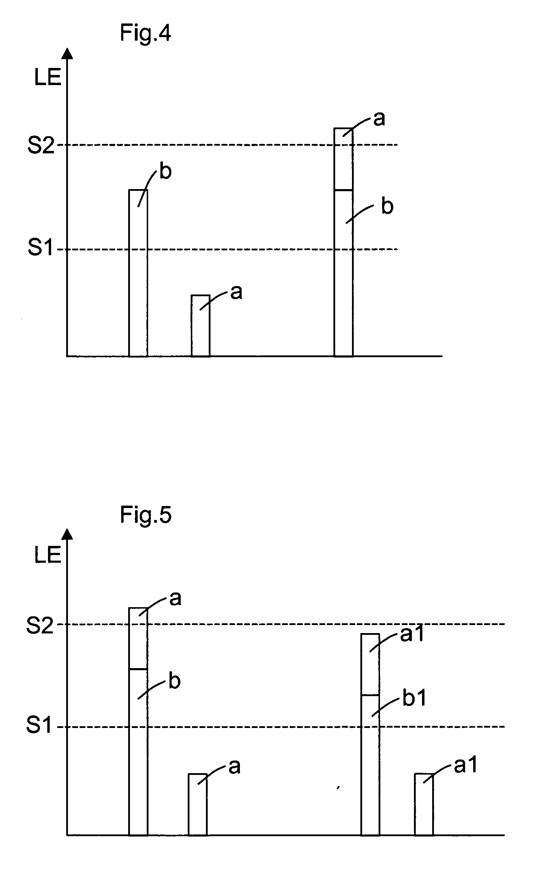

Figur 4 zeigt ein schematisches Diagramm mit einer ersten unteren Schaltschwelle S1 und einer zweiten oberen Schaltschwelle S2 zur Erläuterung der Figuren 2 und 3. Eine Lichtenergie LE ist dabei in der vertikalen Achse aufgetragen. Die Lichtenergie b des direkten Lichtstrahls 12 ist dabei mit einem Balken angegeben. Die Lichtenergie a des umgelenkten Lichtstrahls ist ebenso mit einem Balken angegeben. Die Lichtenergie a des umgelenkten Lichtstrahles ist aufgrund der Reflexion an dem reflektierenden Objekt 26 vermindert gegenüber dem direkten Lichtstrahl. Die Summe der auf dem Empfangselement auftreffenden Lichtenergien a und b ist durch die übereinander angeordneten Balken dargestellt.

Zur Feststellung des umspiegelten Lichtstrahls wird gemäß der vorliegenden Erfindung die an dem Empfangselement En auftreffende Lichtenergie LE nicht nur auf das Übersteigen der unteren ersten Schaltschwelle S1 überwacht, sondern auch auf ein nicht Übersteigen einer oberen zweiten Schaltschwelle S2 entsprechend Figur 4.

Die im folgenden genannten Einstellungen können durch Veränderung der empfangsseitigen Schaltschwellen oder durch Einstellung der sendeseitigen Sendelichtstärke bei vorgegebenen eingestellten Schaltschwellen vorgenommen werden.

Die Schaltschwellen sind so gelegt, dass die Lichtenergie b eines direkten Strahls die untere erste Schaltschwelle S1 übersteigt, also S1 < b ist, die Lichtenergie a des gestreuten Strahls aber unterhalb der unteren ersten Schaltschwelle liegt, also S1 > a und damit b > S1 > a ist.

Die obere zweite Schaltschwelle S2 ist so gelegt, dass die Summe der Lichtenergie b des direkten Lichtstrahls und die Lichtenergie a des umgelenkten Lichtstrahls die obere zweite Schaltschwelle S2 übersteigt, die obere zweite Schaltschwelle S2 aber größer ist als die Lichtenergie b des direkten Strahls, also a+b > S2 > b.

Damit ergibt sich: a + b > S2 > b > S1 > a

Zum Erreichen dieser Bedingung wird für jeden Strahlengang von Paaren eines zugehörigen Sendelements und Empfangselements die Lichtenergie des Sendeelements bzw. die Empfindlichkeit und/oder die Verstärkung des Empfangselements so eingestellt, dass der Bereich zwischen erster unterer Schaltschwelle S1 und zweiter oberer Schaltschwelle S2 in einem linearen Arbeitsbereich des Empfangselementes und der Auswerteeinheit liegt.

Es kann auch die Empfindlichkeit/Verstärkung der Empfangselemente fest eingestellt werden und die Lichtenergie der Sendeelemente wird angepasst und/oder eingestellt.

In Weiterbildung der Erfindung werden gemäß Figur 5 die folgenden Bedingungen eingehalten. Die obere zweite Schaltschwelle S2 ist kleiner als der doppelte Wert der unteren ersten Schaltschwelle S1, also S2 < 2 x S1, wobei die Lichtenergie b des direkten Lichtstrahls ungefähr gleich der oberen zweiten Schaltschwelle S2 ist, also b ≅ S2, aber weiterhin die Lichtenergie b des direkten Lichtstrahls kleiner als die obere zweite Schaltschwelle S2 ist, also b < S2.

Weiter wird die untere erste Schaltschwelle S1 ungefähr gleich der Lichtenergie b des direkten Lichtstrahls eingestellt, wobei die Lichtenergie b des direkten Lichtstrahls größer als die erste Schaltschwelle S1 gewählt wird. Dadurch führen auch umspiegelte Lichtstrahlen, deren Lichtenergie fast der Lichtenergie eines direkten Lichtstrahles entsprechen nicht zu einem gültigen Signal. Die Lichtenergie a des umspiegelten Lichts kann dabei nahezu der Lichtenergie b des direkten Lichtstrahls entsprechen, also a ≅ b.

Weiter ist in Figur 5 der unkritische Fall dargestellt, dass die Summe der Lichtenergie b1 des direkten Lichtstrahls und die Lichtenergie a1 des umgelenkten Lichtstrahls nicht die obere zweite Schaltschwellen überschreiten, da bei Abdeckung des direkten Lichtstrahls lediglich noch die Lichtenergie a1 des umspiegelten Lichtstrahls relevant ist, welche die erste untere Schaltschwelle nicht überschreitet und in diesem Fall ein Objektfeststellungssignal ausgegeben wird.

### Bezugszeichenliste:

- 1: optoelektronischer Sensor
- 2: Lichtgitter
- 4: Sendeelemente
- 6: Empfangselemente
- 8: erste Leiste
- 10: zweite Leiste
- 12: Lichtstrahl
- 14: Schutzfeld
- 16: Lichtsendekegel
- 18: Empfangskegel
- 20: Steuereinheit
- 22: Auswerteeinheit
- 24: Objekt
- 26: reflektierendes Objekt
- LE: Lichtenergie
- L1, Ln: Sendeelemente
- E1, En: Empfangselemente
- S1: untere erste Schaltschwelle
- S2: obere zweite Schaltschwelle
- a, a1: Lichtenergie des umgelenkten/umspiegelten Lichtstrahls
- b, b1: Lichtenergie des direkten Lichtstrahls

## Patentansprüche

1. Optoelektronischer Sensor bestehend aus
einer ersten Leiste (8) mit Sendeelementen (L1 - Ln) und/oder Empfangselementen (E1 - En) und einer zweiten Leiste (10) mit Sendeelementen (L1 - Ln) und/oder Empfangselementen (E1 - En), wobei Sendeelemente (L1 - Ln) einer Leiste (8, 10) mit Empfangselementen (E1 - En) der anderen Leiste (10, 8) Sende-/Empfangspaare bilden zur Bildung eines Schutzfeldes (14), mit einer Auswerteeinheit (22) zur Auswertung des empfangenen Lichts der Empfangselemente (E1 - En), wobei ein Lichtstrahl (12) zwischen Sendeelementen (L1 - Ln) und Empfangselementen (E1 - En) als unterbrochen gilt, wenn empfangenes Licht eine erste untere Schaltschwelle (S1) unterschreitet und als nicht unterbrochen gilt, wenn eine erste untere Schaltschwelle (S1) überschritten wird und die Auswerteeinheit dazu ausgebildet ist, ein Objektfeststellungssignal auszugeben wenn wenigstens ein Lichtstrahl (12) unterbrochen ist,
**dadurch gekennzeichnet, dass**
in der Auswerteeinheit (22) zur Auswertung des empfangenen Lichts wenigstens eines Empfangselementes (E1 - En) eine zweite obere Schaltschwelle (S2) vorgesehen ist, deren Wert über dem Wert der ersten unteren Schaltschwelle (S1) liegt, wobei die Auswerteeinheit dazu ausgebildet ist, ein Signal zur Meldung einer Umspiegelung abzugeben , wenn der Wert des empfangenen Lichts über dem zweiten oberen Schwellwert (S2) liegt.

2. Optoelektronischer Sensor nach Anspruch 1, **dadurch gekennzeichnet, dass** die erste untere Schaltschwelle (S1) derart eingestellt ist, dass die Lichtenergie (a) von gestreutem, umgelenkten oder umspiegeltem Licht unterhalb dieser ersten unteren Schaltschwelle (S1) liegt.

3. Optoelektronischer Sensor nach einem der vorhergehenden Ansprüche, **dadurch gekennzeichnet, dass** der Wert der oberen zweiten Schaltschwelle (S2) kleiner ist als der doppelte Wert der unteren ersten Schaltschwelle (S1), wobei die Lichtenergie (b) von direkten Lichtstrahlen kleiner gleich der zweiten oberen Schaltschwelle (S2) ist.

4. Optoelektronischer Sensor nach einem der vorhergehenden Ansprüche, **dadurch gekennzeichnet, dass** die untere erste Schaltschwelle (S1) kleiner gleich der Lichtenergie (b) von direkten Lichtstrahlen ist.

5. Optoelektronischer Sensor nach einem der vorhergehenden Ansprüche, **dadurch gekennzeichnet, dass** die Sendeelemente (L1 - Ln) so eingestellt sind, dass diese alle zu einer gleichen Lichtenergie (b) auf den zugehörigen Empfangselementen (E1 bis En) führen und die Lichtenergie (b) abhängig von einem Abstand zwischen den Sendeelementen (L1 - Ln) und Empfangselementen (E1 bis En) nur noch an allen Sendeelementen (L1 - Ln) gleichermaßen veränderbar ist.

6. Optoelektronischer Sensor nach einem der vorhergehenden Ansprüche, **dadurch gekennzeichnet, dass** die Lichtstrahlen (12) von verschiedenen Sende-/Empfangspaaren unterschiedlich kodiert sind.

7. Optoelektronischer Sensor nach einem der vorhergehenden Ansprüche, **dadurch gekennzeichnet, dass** dieser ein Sicherheitslichtgitter (2) ist.

## Claims

1. An optoelectronic sensor, comprising
a first strip (8) having transmitter elements (L1 - Ln) and/or receiver elements (E1 - En) and a second strip (10) having transmitter elements (L1 - Ln) and/or receiver elements (E1 - En), wherein the transmitter elements (L1 - Ln) of one strip (8, 10) form transmitter/ receiver pairs with receiver elements (E1 - En) of the other strip (10, 8) for the formation of a protective field (14), and an evaluation unit (22) for the evaluation of the received light of the receiver elements (E1 - En), wherein a light beam (12) between the transmitter elements (L1 - Ln) and receiver elements (E1 - En) counts as interrupted when received light falls below a first lower switching threshold (S1) and as not interrupted when a first lower switching threshold (S1) is exceeded and wherein the evaluation unit is designed to output an object detection signal when at least one light beam (12) is interrupted,
**characterized in that**,
for the evaluation of the received light of at least one receiver element (E1 - En), a second upper switching threshold (S2) is provided in the evaluation unit (22) the value of which lies above the value of the first lower switching threshold (S2), with the evaluation unit being designed to output a signal to indicate bypass light when the value of the received light lies above the second upper threshold (S2).

2. An optoelectronic sensor in accordance with claim 1, **characterized in that** the first lower switching threshold (S1) is set such that the light energy (a) of scattered light, deflected light or bypass light lies beneath this lower threshold value (S1).

3. An optoelectronic sensor in accordance with one of the preceding claims, **characterized in that** the value of the upper second switching threshold (S2) is smaller than twice the value of the lower first switching threshold (S1), with the light energy (b) of direct light rays being smaller than or the same as the second upper switching threshold (S2).

4. An optoelectronic sensor in accordance with any one of the preceding claims, **characterized in that** the lower first switching threshold (S1) is smaller than or equal to the light energy (b) of direct light rays.

5. An optoelectronic sensor in accordance with any one of the preceding claims, **characterized in that** the transmitter elements (L1 - Ln) are set so that they can all lead to the same light energy (b) on the associated receiving elements (E1 to En) and the light energy (b) can only be changed to the same extent at all transmitter elements (L1 - Ln) in dependence on a spacing between the transmitter elements (L1 - Ln) and receiver elements (E1 to En).

6. An optoelectronic sensor in accordance with any one of the preceding claims, **characterized in that** the light beams (12) from different transmitter receiver pairs are differently coded.

7. An optoelectronic sensor in accordance with any one of the preceding claims, **characterized in that** it is a safety light grid (2).

## Revendications

1. Capteur optoélectronique comprenant
une première barrette (8) avec des éléments émetteurs (L1 - Ln) et/ou des éléments récepteurs (E1 - En) et une seconde barrette (10) avec des éléments émetteurs (L1 - Ln) et/ou des éléments récepteurs (E1 - En), tels que les éléments émetteurs (L1 - Ln) d'une barrette (8, 10) forment avec des éléments récepteurs (E1 - En) de l'autre barrette (10, 8) des paires émetteur/récepteur pour former un champ de protection (14), comprenant une unité d'évaluation (22) pour évaluer la lumière reçue des éléments récepteurs (E1 - En), dans lequel un rayon lumineux (12) entre des éléments émetteurs (L1 - Ln) et des éléments récepteurs (E1 - En) est considéré comme interrompu quand la lumière reçue passe au-dessous d'un premier seuil de commutation inférieur (S1), et n'est pas considéré comme interrompu quand elle passe au-dessus d'un premier seuil de commutation inférieur (S1), et l'unité d'évaluation est réalisée pour délivrer un signal de constatation d'objet quand au moins un rayon lumineux (12) est interrompu,
**caractérisé en ce que**
pour l'évaluation de la lumière reçue d'au moins un élément récepteur (E1 - En), il est prévu dans l'unité d'évaluation (22) un second seuil de commutation supérieur (S2) dont la valeur est au-dessus de la valeur du premier seuil de commutation inférieur (S1), et l'unité d'évaluation est réalisée pour délivrer un signal pour signaliser une réflexion quand la valeur de la lumière reçue est au-dessus de la seconde valeur seuil supérieure (S2).

2. Capteur optoélectronique selon la revendication 1, **caractérisé en ce que** le premier seuil de commutation inférieur (S1) est choisi de telle façon que l'énergie lumineuse (a) de la lumière diffusée, renvoyée ou réfléchie est au-dessous de ce premier seuil de commutation inférieur (S1).

3. Capteur optoélectronique selon l'une des revendications précédentes, **caractérisé en ce que** la valeur du second seuil de commutation supérieur (S2) est inférieure à deux fois la valeur du premier seuil de commutation inférieure (S1), et l'énergie lumineuse (b) de rayon lumineux direct est inférieure ou égale au second seuil de commutation supérieur (S2).

4. Capteur optoélectronique selon l'une des revendications précédentes, **caractérisé en ce que** le premier seuil de commutation inférieur (S1) est inférieur ou égal à l'énergie lumineuse (b) de rayons lumineux directs.

5. Capteur optoélectronique selon l'une des revendications précédentes, **caractérisé en ce que** les éléments émetteurs (L1 - Ln) sont réglés de telle façon que ceux-ci mènent tous à une énergie lumineuse égale (b) sur les éléments récepteurs associés (E1 à En), et l'énergie lumineuse (b) est modifiable de la même manière uniquement au niveau de tous les éléments émetteurs (L1 - Ln) en fonction d'une distance entre les éléments émetteurs (L1 - Ln) et les éléments récepteurs (E1 à En).

6. Capteur optoélectronique selon l'une des revendications précédentes, **caractérisé en ce que** les rayons lumineux (12) de différentes paires émetteur/récepteur sont codés de manière différente.

7. Capteur optoélectronique selon l'une des revendications précédentes, **caractérisé en ce que** celui-ci est une barrière lumineuse de sécurité (2).
